# EUROPÄISCHE PATENTSCHRIFT

(11) **EP 1 453 465 B1**
(45) Veröffentlichungstag und Bekanntmachung des Hinweises auf die Patenterteilung: **04.05.2005**
(21) Anmeldenummer: 03708154.4
(22) Anmeldetag: 27.02.2003
(51) Int. Cl.: A61J 1/16, F25D 3/08, B65D 81/38

(54) **BEHÄLTER ZUM TRANSPORT VON GÜTERN BEI GLEICHBLEIBENDER TEMPERATUR**
CONTAINERS FOR TRANSPORTING GOODS AT A CONSTANT TEMPERATURE
CONTENEURS DESTINES AU TRANSPORT DE MARCHANDISES A TEMPERATURE CONSTANTE

(30) Priorität: 12.04.2002 DE 10216263
(43) Veröffentlichungstag der Anmeldung: 08.09.2004
(73) Patentinhaber: delta T Gesellschaft für Medizintechnik GmbH, 35394 Giessen (DE)
(72) Erfinder: BIENERT, Kai, 35435 Wettenberg (DE); NEHRING, Dirk, 35037 Marburg (DE)
(74) Vertreter: Heim, Hans-Karl, Dipl.-Ing.
(86) Internationale Anmeldenummer: PCT/EP2003/002022
(87) Internationale Veröffentlichungsnummer: WO 2003/086269

(56) Entgegenhaltungen:
- DE-A- 4 320 388
- DE-A- 10 030 102
- DE-A- 19 832 559

## Beschreibung

Die Erfindung betrifft Behälter aus Kunststoff zum Transport und Lagern von Gütern bei gleichbleibender Temperatur gemäß dem Oberbegriff des Anspruchs 1 und ein Verfahren zur Herstellung derartiger Behälter gemäß dem Oberbegriff des Anspruchs 6.

Zum Transport und Lagern von Gütern bei einer konstanten Temperatur sind Kunststoffbehälter bekannt, welche in der Regel etwa quaderförmig ausgebildet sind und einen Hohlraum bzw. eine Kammer für ein Mittel mit hoher Aufnahmefähigkeit für Kälte oder Wärme, beispielsweise ein Latentwärmespeichermaterial, aufweisen. Diese Kälte- und Wärmespeicher können auch aus einer Kunststofffolie hergestellt und als Beutel ausgebildet sein, welche das entsprechende Latentwärmespeichermaterial enthalten. Diese Kunststoffbehälter werden in der Regel in Isoliertaschen und -boxen verwendet und im engen Kontakt mit den zu temperierenden Gütern angeordnet.

Es sind außerdem doppelwandige Behälter bekannt, welche einen Aufnahmeraum für ein zu transportierendes Gut aufweisen. Die Behälter dienen insbesondere zum Transport von pharmazeutischen und medizinischen Produkten, wie Blutkonserven, Zellkulturen, Organproben und dergleichen. Für diese besonders temperaturempfindlichen Güter werden in immer größeren Umfang Paraffine als Latentwärmespeichermaterial eingesetzt, welche in Kombination mit einer geeigneten Isolierung das jeweils erforderliche Temperaturniveau über einen relativ langen Zeitraum konstant halten.

In der deutschen Patentanmeldung DE 100 30 102 A1 ist ein aus zwei nahezu gleichen, doppelwandigen Zellen bestehender Transport-, Aufbewahrungs- und Schutzbehälter beschrieben. Die Zellen sind derart geformt, dass sie einen Aufnahmeraum für das aufzubewahrende Gut bilden, wenn sie verbunden werden. Nach aussen ist der Aufnahmeraum durch die Hohlräume der zwei Zellen mit dem darin aufgenommenen Latentwärmespeichermaterial abgeschirmt.

Als Latentwärmespeicher eingesetzte Paraffine sind im abgekühlten Zustand in der Regel eine feste Masse, weshalb die Einhaltung der Temperatur auch visuell überprüft werden kann, wenn der Behälter zumindest partiell durchsichtig ausgebildet ist.

Nachteilig ist jedoch, dass Paraffine, sofern sie als reine Substanzen verwendet werden, durch den Kunststoffbehälter diffundieren. Die Einhaltung eines Temperaturniveaus ist dann nicht mehr gewährleistet. Zudem besteht die Gefahr, dass das zu transportierende Gut beschädigt und unbrauchbar wird.

Es ist bekannt, Paraffine in einem immobilisierten Zustand als Latentwärmespeichermaterial zu verwenden. Die Paraffine sind z.B. in Poren oder Kapillaren eines Trägermaterials, welches vorzugsweise granulatförmig ausgebildet ist, aufgenommen. In der immobilisierten Form ist jedoch ein größeres Volumen für die jeweils erforderliche Umwandlungsenergie erforderlich.

Außerdem können die durch die Wandung des Transportbehälters diffundierenden Paraffine bis in den Aufnahmeraum und die pharmazeutischen und medizinischen Produkte gelangen. Diese Güter sind im allgemeinen ebenfalls in paraffindurchlässigen Kunststofffolien, -beuteln oder -gefäßen aufgenommen.

Der Erfindung liegt die **Aufgabe** zugrunde, einen Kunststoffbehälter zum Transport und Lagern von Gütern zu schaffen, welcher auch bei Verwendung von Paraffinen als Latentwärmespeichermaterial außerordentlich vorteilhaft für alle Güter und insbesondere für hochempfindliche Materialien des medizinischen und pharmazeutischen Bereichs verwendet werden kann. Außerdem wird ein Verfahren zur Herstellung eines derartigen Behälters angegeben.

Im Bezug auf den Behälter wird die Aufgabe erfindungsgemäß durch die Merkmale des Anspruchs 1 und in Bezug auf das Verfahren durch die Merkmale des Anspruchs 6 gelöst.

Zweckmäßige und vorteilhafte Merkmale sind in den Unteransprüchen enthalten und in dem Ausführungsbeispiel beschrieben.

Ein Grundgedanke der Erfindung kann darin gesehen werden, die Kunststoffbehälter diffusionsdicht auszubilden, so dass die Paraffine in nichtimmobilisierter Form als Latentwärmespeicher verwendet und einfach in einen oder auch mehrere Hohlräume eingefüllt werden können, wobei Diffusionsverluste sowie Beschädigungen des zu transportierenden Gutes verhindert werden.

Erfindungsgemäß weist ein Behälter aus einem Kohlenwasserstoff-Kunststoff eine Sperrschicht in seinen oberflächennahen Bereichen auf, welche durch eine Fluorpenetration und Substitution der Wasserstoffatome durch Fluoratome gebildet und für Paraffine undurchlässig ist.

Indem ein Kunststoffbehälter, welcher wenigstens einen Hohlraum zur Aufnahme eines Latentwärmespeichers auf Paraffinbasis aufweist, einer Fluorbehandlung unter definierten Bedingungen unterzogen wird, wird an seinen Oberflächen, wozu auch die Oberflächen in den Hohlräumen gehören können, eine teflonähnliche Struktur gebildet, welche auf eine Fluorpenetration und Substitution der Wasserstoffatome durch Flouratome zurückzuführen ist. Die fluorierte Oberflächenschicht ist unpolar und wirkt abstossend auf die unpolaren Paraffine, insbesondere n-Paraffine, des Latentwärmespeichermaterials.

Es ist vorteilhaft, dass neu hergestellte, an sich gebrauchsfertige Kunststoffbehälter und auch Kunststoffbehälter, welche bereits längere Zeit im Gebrauch waren, entsprechend den Erfordernissen durch eine Fluorbehandlung mit einer für Paraffine undurchlässigen Oberflächen-Sperrschicht versehen werden können.

Zur Herstellung diffusionsdichter Kunststoffbeutel empfiehlt es sich, das Ausgangsmaterial, z.B. Kunststofffolien oder -schläuche, einer Fluorierung zu unterziehen.

Die Fluorierung von Kunststoffartikeln ist zur Erzielung unterschiedlicher Eigenschaften und Oberflächen an sich bekannt. So ist in der US-PS 5,475,450 ein Verfahren zur Fluoreinlagerung in Kontaktlinsen beschrieben, um eine höhere Resistenz gegenüber Proteinablagerungen, eine verbesserte Gasdurchlässigkeit, insbesondere für Sauerstoff, und eine geringere Verklebungsneigung zu erreichen.

Bei dem in der US-PS 4,144,374 beschriebenen LaMarverfahren werden Kunststoffartikel in einem Reaktor, welcher mit Helium gefüllt ist, angeordnet. Sukzessive wird ultrareines Fluorgas in den Reaktor eingeführt und eine Fluorierung bei relativ niedrigen Temperaturen durchgeführt.

Nach der US-PS 3,992,221 wird eine bessere Griffigkeit bei chirurgischen Handschuhen durch eine Fluorierung mit Hilfe eines Fluor-Inertgas- bzw. Fluor-Edelgas-Gemisches erreicht. Die DE 34 15 381 C2 betrifft O-Ringe aus Polymeren, deren Reibungsverhalten durch Behandlung mit einem Fluor-Gasgemisch erhöht werden soll. In der DE 24 11 908 C3 ist die Fluorierung von Kunststofffolien beschrieben, welche die Bedruckbarkeit und Haftung verbessern soll.

Nach der EP 0 629 654 A1 erfolgt die Fluorierung zur Vorbereitung einer nachfolgenden Lackierung mit einem Gasgemisch, welches neben Fluor und Stickstoff 10 bis 16 Vol.-% Sauerstoff enthält, und die in der EP 0 767 198 A1 beschriebene Fluorbehandlung soll eine nachfolgende elektrostatische Sprühlackierung verbessern.

Keine der vorgenannten Druckschriften betrifft Behälter zum Transport und Lagern von Gütern bei gleichbleibender Temperatur mit einem Latentwärmespeichermaterial auf Paraffinbasis in einem Hohlraum, bei welchen mit Hilfe einer Fluorierung paraffinundurchlässige Oberflächen-Schutzschichten gebildet werden.

Erfindungsgemäß erfolgt die Fluorierung zur Ausbildung paraffindichter Schutzschichten an Behältern aus Kohlenwasser stoffpolymeren in einem Vakuumprozess, welcher in einem Reaktor, z.B. in einem Autoklaven, durchgeführt werden kann. Die aus Polyethylen, Polypropylen, Polybutylen, Polycarbonat, Polyinylchlorid, Polystyrol, Polyamid, Acrylpolymer, Polyalkylenteraphthalat, einem Co- oder Mischpolymer gefertigten Transport- und Lagerbehälter werden gesäubert und getrocknet und beabstandet zueinander in dem mit Stickstoff gespülten Autoklaven angeordnet.

Danach wird der mit den Transportbehältern beschickte Autoklav bis zu einem Druck von ca. 1 mbar evakuiert. Dabei werden Reste von Sauerstoff und Feuchtigkeit entfernt, so dass eine nachteilige HF-Bildung und Aufrauhung der Oberflächen vermieden werden.

In den auf ca. 1 mbar evakuierten Autoklaven wird nun eine Fluor-Stickstoff-Gasmischung eingeführt, welche aus etwa 5 bis 20 Vol.-%, vorzugsweise 10 Vol.-% Fluor, und 95 bis 80 Vol.-%, vorzugsweise 90 Vol.-% Stickstoff, besteht. Eine Gasmischung aus Stickstoff und 10 Vol.-% Fluor steht vorteilhafterweise in Flaschen abgefüllt zur Verfügung, so dass eine getrennte Zuführung und Regelung der Gasbestandteile entfallen kann.

Der Autoklav wird mit dem Fluor-Stickstoff-Gasgemisch bis zu einem Druck von etwa 500 mbar aufgefüllt, welches dann bei einer Temperatur im Bereich von etwa 30 bis 60° C, insbesondere bei etwa 40° C, wenigstens 30 Minuten, vorteilhafterweise etwa 1 Stunde, auf die Kunststoffbehälter einwirkt. Die Fluorierung kann unter Plasma- oder Nichtplasma-Bedingungen durchgeführt werden.

Es ist zweckmäßig, die Verfahrensparameter für die zu behandelnden Behälter in Abhängigkeit von deren Größe und Formgebung zu wählen, wobei diese z.B. empirisch in Bezug auf einen paraffindichten Behälter ermittelt werden können. Die Dichtigkeit eines bei definierten Parametern behandelten Referenzbehälters kann durch Wägungen des mit Paraffinen gefüllten Behälters in bestimmten Zeitabständen festgestellt werden. Eine Gewichtsverringerung zeigt an, dass die Dichtigkeit nicht mehr gegeben ist und unter Umständen eine wiederholte Fluorierung des Behälters durchgeführt werden muss.

Auch die Eindringtiefe der Fluoratome kann meßtechnisch ermittelt werden. Vorteilhaft ist eine Fluorpenetration in einer Eindringtiefe von wenigstens etwa 1 µm.

Es wurde gefunden, dass der Wirkungsgrad der Fluoreinlagerung bzw. Substitution der Wasserstoffatome durch die Fluoratome in den Oberflächenschichten des Kunststoffbehälters eine asymptotische Kurve beschreibt. Eine effiziente und wirtschaftlich sinnvolle Fluorierung mit einem Wirkungsgrad von 90 % wird bei einem absoluten Druck von etwa 500 mbar, einer Gasmischung aus 10 Vol.-% Fluor und 90 Vol.-% Stickstoff während etwa einer Stunde und bei etwa 40° C erzielt.

Die wesentlichen Vorteile der fluorierten, paraffinundurchlässigen Kunststoff-Transportbehälter und des erfindungsgemäßen Verfahrens bestehen darin, dass reine Paraffine als Latentwärmespeichermaterial in den wenigstens einen Hohlraum eines Kunststoffbehälters eingefüllt werden können und eine Immobilisierung nicht erforderlich ist. Neben einer besseren Handhabung ist ein geringerer Materialverbrauch an Paraffinen zu verzeichnen. Darüber hinaus wird eine Beeinträchtigung der hochempfindlichen Güter, wie beispielsweise Zellstrukturen, Gen- und Gewebematerial, pharmazeutische Produkte und dergleichen, durch austretende Paraffine verhindert. Das Verfahren kann rasch und effektiv durchgeführt werden, insbesondere, wenn ein Autoklav mit einem entsprechenden Fassungsvermögen zur Verfügung steht.

Die Erfindung wird nachstehen anhand einer Zeichnung weiter erläutert.

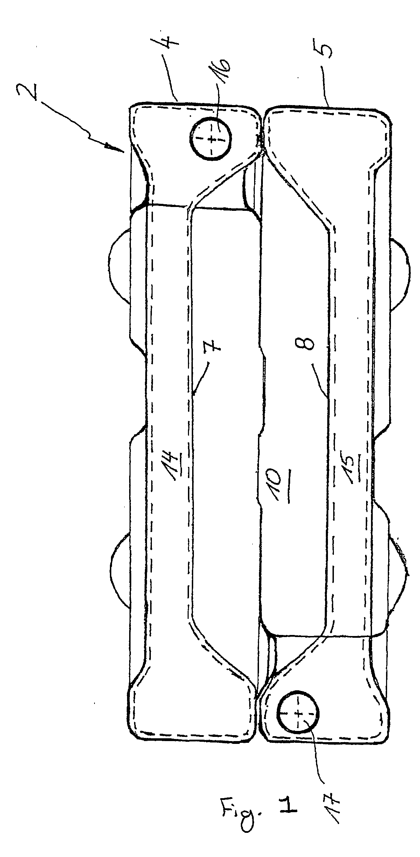

Die einzige Zeichnungsfigur (Fig.1) zeigt in einer Querschnittsdarstellung einen Behälter 2 aus HDPE (Polyethylen hoher Dichte), welcher zum Transport von Blutkonserven vorgesehen ist. Der Behälter besteht aus zwei Behälterteilen oder Zellen 4, 5, welche im wesentlichen gleich ausgebildet sind. Die Zellen 4, 5 weisen randseitig Ausnehmungen und komplementäre Ausformungen (nicht dargestellt) für eine Klemm- oder Rastverbindung der Zellen 4, 5 auf.

Die Zellen 4, 5 weisen außerdem jeweils eine Innenseite 7, 8 auf, welche vertieft ausgebildet ist, so dass bei verbundenen Zellen 4, 5 ein Aufnahmeraum 10 für das aufzubewahrende und zu transportierende Gut (nicht dargestellt) gebildet ist. Die Zellen 4, 5 sind außerdem mit jeweils einem Hohlraum 14, 15 versehen, welcher mit einem Latentwärmespeichermaterial gefüllt ist. Der Aufnahmeraum 10 ist nahezu vollständig von den beiden Hohlräumen 14, 15 und den n-Paraffinen als Latentwärmespeichermaterial umgeben.

Bei Verwendung von nichtimmobilisierten Paraffinen als Latentwärmespeichermaterial sind beide Zellen 4, 5 fluorbehandelt und alle Oberflächen, einschließlich der Innenseiten 7, 8 mit einer teflonähnlichen Sperrschicht versehen. Dadurch ist eine Diffusion der Paraffine durch die Wandung wirkungsvoll und langzeitstabil verhindert.

Die Fluorierung der Behälter 2 erfolgt in einem Autoklaven, in welchem die einzelnen Zellen 4, 5 zueinander beabstandet angeordnet werden. Ein Einfüllstutzen 16, 17 in beiden Zellen 4, 5 ist dabei nicht verschlossen, so dass die Fluor-Stickstoff-Mischung mit einer Fluorkonzentration von 10 Vol.-% auch in die Hohlräume 14, 15 gelangen kann.

Die Zuführung der Fluor-Stickstoff-Mischung erfolgt nach Evakuierung des Autoklaven bis auf einen absoluten Druck von etwa 1 mbar. Danach wird die vorgenannte Fluor-Stickstoffmischung bis zu einem absoluten Druck von etwa 500 mbar zugeführt und bei etwa 40°C und einer Verfahrensdauer von etwa 1 h die Fluorierung durchgeführt.

Anschließend wird unter Anwendung von Unterdruck noch wenigstens eine Spülung mit Stickstoffgas durchgeführt. Nach Entnahme der Zellen 4, 5 aus dem Autoklaven können die Paraffine als reine Substanzen durch die Einfüllstutzen 16, 17 in die Hohlräume 14, 15 der Zellen 4, 5 eingefüllt werden. Nach Verschließen der Einfüllstutzen 16, 17 stehen die Zellen 4, 5 als Behälter 2 zum Transport und Lagern von hochempfindlichen Gütern bei einer gleichbleibenden Temperatur zur Verfügung.

## Patentansprüche

1. Behälter aus Kunststoff zum Transport und Lagern von Gütern bei gleichbleibender Temperatur,
mit wenigstens einem Hohlraum (14; 15) zur Aufnahme eines Latentwärmespeichermaterials auf Paraffinbasis,
**dadurch gekennzeichnet,**
**dass** der Behälter (2) fluorierte Oberflächen-Sperrschichten aufweist und
**dass** in dem Hohlraum (14; 15) Paraffine in unimmobilisierter Form diffusionsdicht aufgenommen sind.

2. Behälter nach Anspruch 1,
**dadurch gekennzeichnet,**
**dass** der Behälter (2) aus einem Kunststoffpolymer besteht, welches Wasserstoffatome enthält, und
**dass** die fluorierten Oberflächen-Sperrschichten durch eine Fluorpenetration und Substitution der Wasserstoffatome durch Fluoratome in einer Eindringtiefe von wenigstens 1 µm gebildet sind.

3. Behälter nach Anspruch 2,
**dadurch gekennzeichnet,**
**dass** das Kunststoffpolymer ein Polyolefin, insbesondere Polyethylen, Polypropylen, Polybutylen oder ein Copolymerisat sowie Polycarbonat, Polyvinylchlorid, Polystyrol, Polyamid, Polyalkylenteraphtalat, ein Acrylpolymer, insbesondere Polymethylmethacrylat (PMMA), ein Polymer aus 2-Hydroxyethylmethylacrylat (HEMA), ein Silicon oder ein Polysulfonat oder ein Co- oder Mischpolymer ist.

4. Behälter nach einem der vorhergehenden Ansprüche,
**dadurch gekennzeichnet,**
**dass** die fluorierten paraffinundurchlässigen Oberflächen-Sperrschichten durch eine Behandlung mit einem Fluor-Inertgas-Gemisch unter Plasma- oder Nichtplasma-Bedingungen gebildet sind.

5. Behälter nach einem der vorhergehenden Ansprüche,
**dadurch gekennzeichnet,**
**dass** zwei nahezu gleiche Zellen (4, 5) unter Ausbildung eines Aufnahmeraums (10) für das zu transportierende Gut verbunden sind und dass beide Zellen (4, 5) einen Hohlraum (14, 15) für n-Paraffine aufweisen, welche nach einer Fluorierung der Zellen (4, 5) mit Ausbildung von diffusionsdichten Oberflächen-Sperrschichten in die Hohlräume (14, 15) einfüllbar sind.

6. Verfahren zum Herstellen von paraffindichten Behältern aus Kunststoff zum Transport und Lagern von Gütern bei gleichbleibender Temperatur, insbesondere nach einem der vorhergehenden Ansprüche,
**dadurch gekennzeichnet,**
**dass** die aus einem Kohlenwasserstoffpolymer bestehenden Behälter in einem Reaktor angeordnet und bei Unterdruck einem Fluor-Inertgasgemisch zur Ausbildung teflonähnlicher Oberflächen-Schutzschichten ausgesetzt werden.

7. Verfahren nach Anspruch 6,
**dadurch gekennzeichnet,**
**dass** die Behälter nach einer Säuberung und Trocknung einem Fluor-Stickstoff-Gasgemisch, welches 5 bis 20 Vol.-% Fluor enthält, bei einem Druck von etwa 300 bis 700 mbar und bei einer Temperatur von 30 bis 60° C für etwa 30 bis 300 Minuten ausgesetzt werden.

8. Verfahren nach Anspruch 6 oder 7,
**dadurch gekennzeichnet,**
**dass** die Behälter in einem Autoklaven beabstandet zueinander angeordnet werden, dass der Autoklav auf etwa 1 mbar evakuiert wird, danach ein Fluor-Stickstoff-Gemisch, welches etwa 10 Vol.-% Fluor enthält, bis zu einem Druck von etwa 500 mbar eingefüllt wird und dass die Behälter bei etwa 40 °C in etwa 60 Minuten fluoriert werden.

9. Verfahren nach einem der Ansprüche 6 bis 8,
**dadurch gekennzeichnet,**
**dass** die Fluorierung in einer Plasma- oder Nichtplasma-Atmosphäre durchgeführt wird.

10. Verfahren nach einem der Ansprüche 6 bis 9,
**dadurch gekennzeichnet,**
**dass** die Fluorpenetration und Substitution der Wasserstoffatome durch die Fluoratome bis zu einer Eindringtiefe von ≥ 1 µm durchgeführt wird.

11. Verfahren nach Anspruch 10,
**dadurch gekennzeichnet,**
**dass** bei der Fluorierung etwa 25 % der Wasserstoffatome des Kohlenwasserstoffpolymers in oberflächennahen Bereichen durch Fluoratome substituiert werden.

12. Verfahren nach einem der Ansprüche 6 bis 11,
**dadurch gekennzeichnet,**
**dass** die Verfahrensbedingungen der Fluorierung in Abhängigkeit von der Größe, Form und Anzahl der zu fluorierenden Behälter empirisch über die Paraffindichtigkeit bestimmt werden.

13. Verfahren nach Anspruch 12,
**dadurch gekennzeichnet,**
**dass** die Paraffindichtigkeit der fluorierten Behälter durch Wägungen der mit Paraffinen als Latentwärmespeichermaterial in wenigstens einem Hohlraum versehenen Behälter in bestimmten Zeitabständen festgestellt wird.

## Claims

1. Plastic container for the transportation and storage of goods at a constant temperature,
with at least one cavity (14, 15) for receiving a paraffin-based latent heat storage material,
**characterized in that**
the container (2) has fluorinated surface barrier layers and
paraffins in a non-immobilized form are received in diffusion-tight manner in the cavity (14, 15).

2. Container according to claim 1,
**characterized in that**
the container (2) is made from a plastic polymer containing hydrogen atoms and that the fluorinated surface barrier layers are formed by a fluorine penetration and substitution of the hydrogen atoms by fluorine atoms with a penetration depth of at least 1 µm.

3. Container according to claim 2,
**characterized in that**
the plastic polymer is a polyolefin, particularly polyethylene, polypropylene, polybutylene or a copolymer, as well as polycarbonate, polyvinyl chloride, polystyrene, polyamide, polyalkylene terephthalate, an acrylic polymer, particularly polymethyl methacrylate (PMMA), a polymer of 2-hydroxyethyl methacrylate (HEMA), a silicone or a polysulphonate or a copolymer.

4. Container according to one of the preceding claims,
**characterized in that**
the fluorinated, paraffin-impermeable surface barrier layers are formed by a treatment with a fluorine-inert gas mixture under plasma or non-plasma conditions.

5. Container according to one of the preceding claims,
**characterized in that**,
accompanied by the formation of a reception space (10) for the product to be transported, two almost identical compartments (4, 5) are joined and that both compartments (4, 5) have a cavity (14, 15) for n-paraffins which can be filled into the cavities (14, 15) following the fluorination of the compartments (4, 5), accompanied by the formation of diffusion-tight surface barrier layers.

6. Method for the manufacture of paraffin-tight plastic containers for the transportation and storage of goods at a constant temperature, particularly according to one of the preceding claims,
**characterized in that**
the containers made from a hydrocarbon polymer are placed in a reactor and exposed to a fluorine-inert gas mixture under a vacuum for the formation of Teflon-like surface protective coatings.

7. Method according to claim 6,
**characterized in that**,
following cleaning and drying, the containers are exposed to a fluorine-nitrogen gas mixture containing 5 to 20 vol.% fluorine, at a pressure of approximately 300 to 700 mbar and at a temperature of 30 to 60°C for a period of approximately 30 to 300 minutes.

8. Method according to claim 6 or 7,
**characterized in that**
the containers are arranged in spaced manner in an autoclave, that the autoclave is evacuated to approximately 1 mbar, thereafter a fluorine-nitrogen mixture containing approximately 10 vol.% fluorine is introduced up to a pressure of approximately 500 mbar and that the containers are then fluorinated for approximately 60 minutes at approximately 40°C.

9. Method according to one of the claims 6 to 8,
**characterized in that**
the fluorination is performed in a plasma or non-plasma atmosphere.

10. Method according to one of the claims 6 to 9,
**characterized in that**
the fluorine penetration and substitution of the hydrogen atoms by fluorine atoms is carried out up to a penetration depth of ≥ 1 µm.

11. Method according to claim 10,
**characterized in that**,
during fluorination, approximately 25% of the hydrogen atoms of the hydrocarbon polymer are substituted by fluorine atoms in surface-near areas.

12. Method according to one of the claims 6 to 11,
**characterized in that**
the fluorination process conditions are determined empirically via the paraffin tightness as a function of the size, shape and number of the containers to be fluorinated.

13. Method according to claim 12,
**characterized in that**
the paraffin tightness of the fluorinated containers is established at specific time intervals by weighing operations with respect to the containers having paraffins as the latent heat storage material in at least one cavity.

## Revendications

1. Récipient en matière plastique pour le transport et le stockage de marchandises à température constante, avec au moins une cavité (14 ; 15) destinée à recevoir un matériau de stockage de chaleur latente à base de paraffine,
***caractérisé en ce que***
le récipient (2) présente des couches barrières de surface fluorées, et ***en ce que*** des paraffines sous forme non immobilisée sont placées dans la cavité (14 ; 15) d'une manière imperméable à la diffusion.

2. Récipient selon la revendication 1,
***caractérisé en ce que***
le récipient (2) est composé d'un polymère synthétique qui contient des atomes d'hydrogène, et **en ce que** les couches barrières de surface fluorées sont formées par une pénétration de fluor et substitution des atomes d'hydrogène par des atomes de fluor sur une profondeur de pénétration d'au moins 1 µm.

3. Récipient selon la revendication 2,
***caractérisé en ce que***
le polymère synthétique est une polyoléfine, en particulier du polyéthylène, du polypropylène, du polybutylène ou un copolymère, ainsi que le polycarbonate, le chlorure de polyvinyle, le polystyrène, le polyamide, le polyalkylènetéréphthalate, un polymère acrylique, en particulier le polyméthylméthacrylate (PMMA), un polymère de 2-hydroxyéhylméthylacrylate (HEMA), un silicone ou un polysulfonate ou un copolymère ou polymère mélangé.

4. Récipient selon l'une quelconque des revendications précédentes,
***caractérisé en ce que***
les couches barrières de surface fluorées imperméables à la paraffine sont formées par un traitement avec un mélange de fluor et de gaz inerte dans des conditions plasma ou non plasma.

5. Récipient selon l'une quelconque des revendications précédentes,
***caractérisé en ce que***
deux cellules (4, 5) quasi identiques sont reliées en formant un logement (10) pour les marchandises à transporter, et
***en ce que*** les deux cellules (4, 5) présentent une cavité (14, 15) pour des n-paraffines qui peuvent être introduites dans les cavités (14, 15) après une fluoration des cellules (4, 5) avec formation de couches barrières de surface imperméables à la diffusion.

6. Procédé de fabrication de récipients en matière plastique imperméables à la paraffine pour le transport et le stockage de marchandises à température constante, en particulier selon l'une quelconque des revendications précédentes,
***caractérisé en ce que***
les récipients composés d'un polymère d'hydrocarbure sont placés dans un réacteur et soumis sous dépression à un mélange fluor-gaz inerte afin de former des couches protectrices de surface similaires au téflon.

7. Procédé selon la revendication 6,
***caractérisé en ce qu'***
après un nettoyage et un séchage, les récipients sont exposés à un mélange de gaz fluor-azote qui contient 5 à 20 % vol. de fluor, à une pression d'environ 300 à 700 mbar et une température de 30 à 60°C pendant environ 30 à 300 minutes.

8. Procédé selon la revendication 6 ou 7,
***caractérisé en ce que***
les récipients sont placés à distance les uns des autres dans un autoclave,
***en ce que*** l'autoclave est évacué jusqu'à environ 1 mbar, puis un mélange fluor-azote contenant environ 10 % vol. de fluor est introduit jusqu'à une pression d'environ 500 mbar, et
***en ce que*** les récipients sont fluorés à environ 40°C pendant environ 60 minutes.

9. Procédé selon l'une quelconque des revendications 6 à 8,
***caractérisé en ce que***
la fluoration est conduite dans une atmosphère de plasma ou de non plasma.

10. Procédé selon l'une quelconque des revendications 6 à 9,
***caractérisé en ce que***
la pénétration du fluor et substitution des atomes d'hydrogène par les atomes de fluor est réalisée jusqu'à une profondeur de pénétration de ≥ 1 µm.

11. Procédé selon la revendication 10,
***caractérisé en ce que**,*
lors de la fluoration, environ 25 % des atomes d'hydrogène du polymère d'hydrocarbure sont remplacés par des atomes de fluor dans des régions proches de la surface.

12. Procédé selon l'une quelconque des revendications 6 à 11,
***caractérisé en ce que***
les conditions du traitement de fluoration sont déterminées empiriquement en fonction de la taille, de la forme et du nombre des récipients à fluorer, par l'intermédiaire de l'imperméabilité à la paraffine.

13. Procédé selon la revendication 12,
***caractérisé en ce que***
l'imperméabilité à la paraffine des récipients fluorés est déterminée à intervalles de temps déterminés en pesant les récipients munis de paraffine en tant que matériau de stockage de chaleur latente dans au moins une cavité.
